# EUROPEAN PATENT APPLICATION

(11) **EP 2 429 121 A1**
(43) Date of publication of application: **14.03.2012**
(21) Application number: 10772022.9
(22) Date of filing: 05.05.2010
(51) Int. Cl.: H04L 12/24, H04L 29/06

(54) **MAPPING METHOD, SYSTEM AND DOMAIN NAME SERVER OF HIERARCHICAL ROUTING ARCHITECTURE**

(30) Priority: 05.05.2009 CN 200910083462
(71) Applicant: Huawei Technologies Co., Ltd., Shenzhen, Guangdong 518129 (CN)
(72) Inventor: WANG, Xuewei, Shenzhen Guangdong 518129 (CN); XU, Xiaohu, Shenzhen Guangdong 518129 (CN)
(74) Representative: Epping - Hermann - Fischer
(86) International application number: PCT/CN2010/072456
(87) International publication number: WO 2010/127619

(57) **Abstract**

The present invention relates to a mapping method, system, and domain name server in hierarchical routing architecture. The mapping method in the hierarchical routing architecture includes: converting a format of a host identifier into a domain name format; and adding a resource record in a domain name system according to the host identifier that is converted into the domain name format, where the resource record includes a mapping relation between the host identifier that is converted into the domain name format and a destination identifier. In embodiments of the present invention, the format of the host identifier is converted into the domain name format, and the resource record in the domain name system is used to store the mapping relation between the host identifier that is converted into the domain name format and the destination identifier. In this way, the mapping relation from the host identifier to the destination identifier may be conveniently and quickly stored and queried, and a development cost is reduced.

## Description

This application claims priority to Chinese Patent Application No. CN200910083462.3, filed with the Chinese Patent Office on May 5, 2009 and entitled "MAPPING METHOD, SYSTEM IN HIERARCHICAL ROUTING ARCHITECTURE AND DOMAIN NAME SERVER ", which is incorporated herein by reference in its entirety.

### FIELD OF THE INVENTION

The present invention relates to the field of communications technologies, and in particular, to a mapping method, system in hierarchical routing architecture and domain name system server.

### BACKGROUND OF THE INVENTION

Some existing studies show that a growth speed of a size of a Border Gateway Protocol (Border Gateway Protocol; BGP for short) routing table starts to overtake a development speed of hardware technologies, which attracts high attention of the industry and the academia. In a Routing and Addressing Workshop in Amsterdam (Routing and Addressing Workshop in Amsterdam) of an Internet Architecture Board (Internet Architecture Board; IAB for short), it is believed that explosive growth of the size of the routing table is caused by many factors, including: wide applications of multi-homing of a user station, traffic engineering, and a provider independent (Provider Independent; PI for short) address, and so on. A root cause is dual semantics that an Internet Protocol (Internet Protocol; IP for short) acts as an identifier (Identifier; ID for short) and a locator (locator) at the same time.

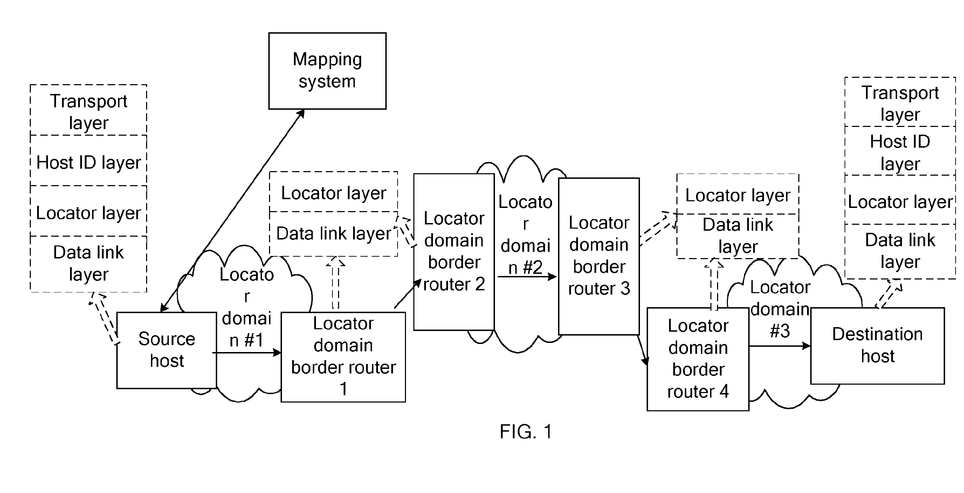

An ID/locator separating scheme is unanimously regarded by the industry as an architectural solution to route scalability, and the hierarchical routing architecture (Hierarchical Routing Architecture; HRA for short) is one of solutions for ID/locator separating. FIG 1 is a schematic structural diagram of existing hierarchical routing architecture. As shown in FIG 1, before sending a data packet, a source host resolves a mapping relation between a host ID and a host locator of a destination host through a mapping system; if the source host and the destination host are not in a same locator domain (Locator Domain; LD for short), the source host sends the data packet to a local locator domain border router (Locator Domain Border Router; LDBR for short); otherwise, the source host directly sends the data packet to the destination host. Before the data packet arrives at a destination LD, the LDBR performs routing based on an LD ID; after the data packet arrives at the destination LD, the LDBR performs routing based on the host locator of the destination host. The HRA introduces a hierarchical host ID and a hierarchical routing system, and supports a route that traverses multiple independent address domains. To separate the host ID from the host locator, a system is required to store and publish the mapping relation from the host ID to the host locator, that is, use the host ID as an index to store and publish the mapping relation from the host ID to the host locator.

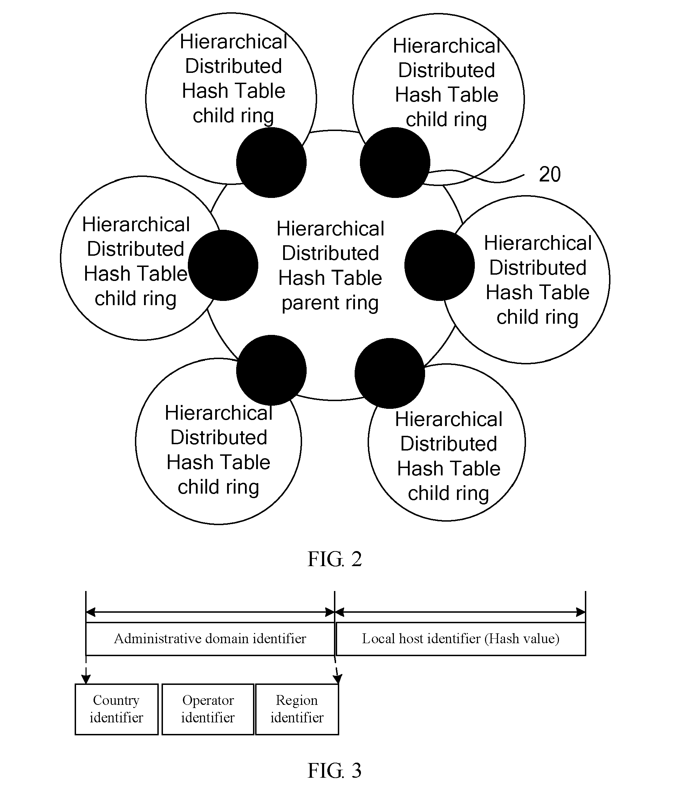

FIG 2 is a schematic structural diagram of an existing hierarchical Distributed Hash Table (Distributed Hash Table; DHT for short). As shown in FIG 2, in a DHT-based peer-to-peer network, the mapping relation from the host ID to the host locator may be stored and queried. The peer-to-peer network includes at least two tiers of overlay networks: a DHT parent ring and a DHT child ring. The DHT parent ring stores an administrative domain (Administrative Domain; AD for short) ID in the host ID, and the DHT child ring stores a local host ID (Local Host ID) in the host ID. Data is transmitted between the DHT parent ring and the DHT child ring through a super node 20.

In the process of implementing the present invention, the inventor finds at least the following problems in the prior art:

When a destination identifier, such as a mapping relation from an HRA host ID to a host locator, is stored and queried in the DHT-based peer-to-peer network, a completely new peer-to-peer network needs to be constructed, which leads to problems such as a high development cost and a failure in conveniently and quickly putting into use.

### SUMMARY OF THE INVENTION

Embodiments of the present invention provide a mapping method, system in hierarchical routing architecture and domain name server to solve problems, such as a high development cost that is required for storing and querying a mapping relation from an HRA host ID to a destination identifier and a failure in conveniently and quickly putting into use in the prior art. In this way, the mapping relation from the HRA host ID to the destination identifier can be quickly and conveniently stored and queried; in addition, the required development cost is low.

An embodiment of the present invention provides a mapping method in hierarchical routing architecture, including:
converting a format of a host identifier into a domain name format; and
adding a resource record in a domain name system according to the host identifier that is converted into the domain name format, where the resource record includes a mapping relation between the host identifier that is converted into the domain name format and a destination identifier.

Another embodiment of the present invention provides a domain name system server, including:
a domain name adding module, configured to add a resource record in a domain name system according to a host identifier that is converted into a domain name format, where the resource record includes a mapping relation between the host identifier that is converted into the domain name format and a destination identifier.

Another embodiment of the present invention provides a mapping system in hierarchical routing architecture, including:
a domain name converting module, configured to convert a format of a host identifier into a domain name format; and
a domain name adding module, configured to add a resource record in a domain name system according to the host ID that is converted into the domain name format, where the resource record includes a mapping relation between the host identifier that is converted into the domain name format and a destination identifier.

The embodiments of the present invention provide the mapping method, system in the hierarchical routing architecture and domain name server to convert the format of the host identifier into the domain name format and store the mapping relation between the host identifier that is converted into the domain name format and the destination identifier by using the resource record in the domain name system. In this way, the mapping relation between the host identifier and the destination identifier may be conveniently and quickly stored and queried, and the development cost is low.

### BRIEF DESCRIPTION OF THE DRAWINGS

FIG 1 is a schematic structural diagram of existing hierarchical routing architecture in the prior art;

FIG 2 is a schematic structural diagram of an existing hierarchical Distributed Hash Table;

FIG 3 is a schematic diagram of a hierarchical format of a host ID in hierarchical routing architecture;

FIG 4 is a schematic diagram of DNS architecture;

FIG 5 is a flowchart of a mapping method in hierarchical routing architecture according to a first embodiment of the present invention;

FIG 6 is a flowchart of a mapping method in hierarchical routing architecture according to a second embodiment of the present invention;

FIG 7 is a schematic diagram of a hierarchical structure of an exemplary mapping system in the second embodiment of the mapping method in the hierarchical routing architecture;

FIG 8 is a schematic diagram of a format of a fourth resource record in the second embodiment of the mapping method in the hierarchical routing architecture;

FIG 9 is a schematic structural diagram of a domain name server according to an embodiment of the present invention;

FIG 10 is a schematic structural diagram of a mapping system in hierarchical routing architecture according to a first embodiment of the present invention; and

FIG 11 is a schematic structural diagram of a mapping system in hierarchical routing architecture according to a second embodiment of the present invention.

### DETAILED DESCRIPTION OF THE EMBODIMENTS

The following further describes the technical solutions of the present invention in detail with reference to the accompanying drawings and embodiments.

Hierarchical routing architecture (HRA) employs a 128-bit hierarchical host ID. FIG 3 is a schematic diagram of a hierarchical format of a host ID in hierarchical routing architecture. As shown in FIG 3, a hierarchy of the host ID is composed of two parts. A former part is an administrative domain identifier AD ID, and a latter part is a Hash value of a public key and the AD ID. The AD ID part may be further divided into a country identifier (Country ID), an Authority ID (Authority ID), which is designed to facilitate competition among multiple ID and administration authorities, and a region identifier (Region ID).

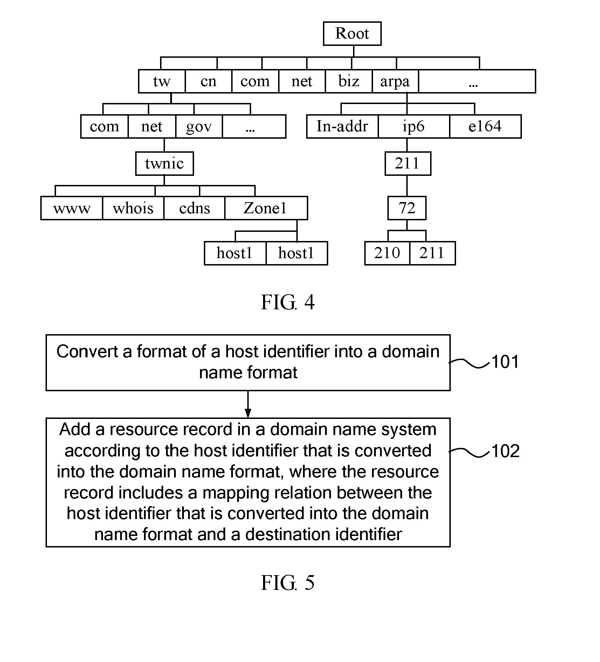

A domain name system (Domain Name System; DNS for short) is a distributed database that maps a domain name with an IP address, and is a core service of the Internet. Because of a hierarchical structure of the domain name, a DNS is composed of DNS servers with a hierarchical structure. FIG 4 is a schematic diagram of DNS architecture. As shown in FIG 4, a top tier of the DNS is a root domain, and a next level of the root domain is a top domain. Domain names, such as a level-2 domain name, a level-3 domain name, and so on, may be defined under the top domain name as required. As shown in FIG 4, a complete domain name is sequentially formed, by using a delimiter ". ", from all nodes in a path that starts from the bottom up. For example, in a domain name "www.sina.com.cn.", "." represents the root domain, "cn" represents the top domain, "com" represents the level-2 domain, "sina" represents the level-3 domain, and "www" is a host name.

A main idea of the embodiment of the present invention is: Convert a format of a host ID into a domain name format; and use a resource record in the domain name system to store mapping relations from the host ID in the hierarchical routing architecture to a host locator, a host domain name, an administrative domain identifier, a public key, and so on.

FIG 5 is a flowchart of a mapping method in hierarchical routing architecture according to a first embodiment of the present invention. As shown in FIG 5, the mapping method in the hierarchical routing architecture includes:

101. Convert a format of a host identifier into a domain name format.

102. Add a resource record in a domain name system according to the host identifier that is converted into the domain name format, where the resource record includes a mapping relation between the host identifier that is converted into the domain name format and a destination identifier.

In the hierarchical routing architecture, the host ID is separated from a host locator. To store the mapping relation from the host ID to a destination identifier such as the host locator, a domain name converting module may convert the host ID into a domain name format, and store the host ID that is converted into the domain name format in a database of a DNS server. Each host ID that is converted into the domain name format may correspond not only to a mapping relation between the host ID and a corresponding host locator, but also to a mapping relation between the host ID and another destination identifier, for example, a mapping relation between the host ID and a host domain name, an administrative domain identifier (AD ID), or a public key (public key; PK for short). Specifically, the domain name converting module may convert the host ID into the domain name format, and a domain name adding module adds a resource record (Resource Record; RR for short) in the domain name system according to the host ID that is converted into the domain name format, where the resource record includes the mapping relation between the host ID that is converted into the domain name format and a destination identifier. The domain name converting module may be configured in a client or a domain name resolver, and the domain name adding module may be configured in a domain name server.

In this embodiment, the format of the host ID is converted into the domain name format, and the resource record in the domain name system is used to store the mapping relation between the host identifier that is converted into the domain name format and the destination identifier, which may be conveniently implemented by adding only a required domain name system server in the domain name system. In this way, the mapping relation between the host ID and the destination identifier may be quickly stored and queried, and a development cost is low.

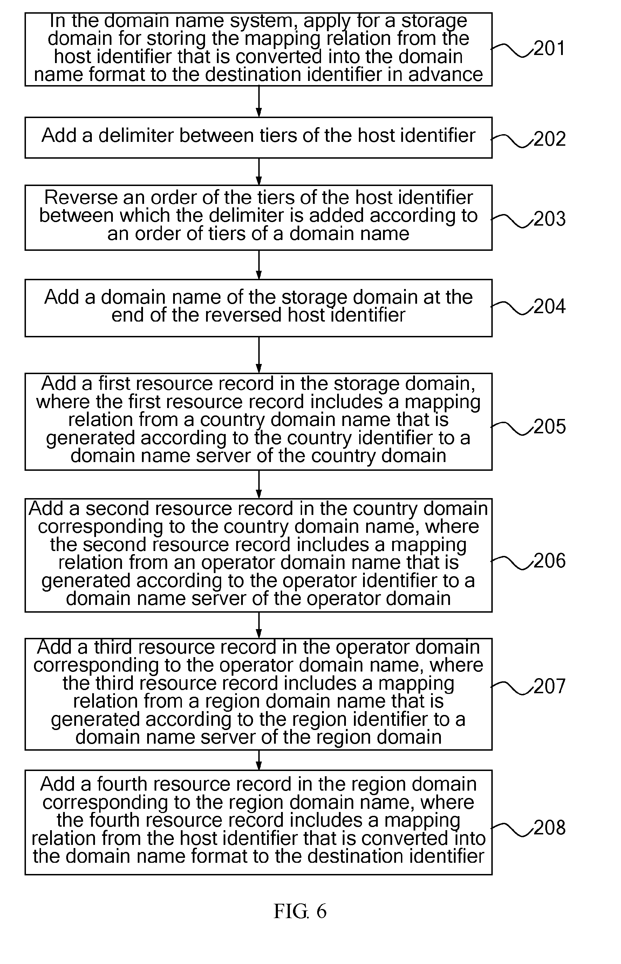

FIG 6 is a flowchart of a mapping method in hierarchical routing architecture according to a second embodiment of the present invention. As shown in FIG 6, on the basis of the first embodiment of the mapping method in the hierarchical routing architecture in the present invention, this mapping method in the hierarchical routing architecture includes:

201. In a domain name system, apply for a storage domain for storing a resource record that includes a mapping relation from a host identifier that is converted into a domain name format to a destination identifier.

Under a top domain, such as an ARPA domain, of the DNS, apply for a new domain for storing the mapping relation from the host ID of the HRA to the destination identifier. The new domain may be named "HRA_ID", and therefore, an "HRA_ID.ARPA." domain is the resource record storage domain for storing the mapping relation between the host ID that is converted into the domain name format and the destination identifier. To facilitate distributed management, the storage domain may be divided into multiple sub-domains, and the sub-domains may be managed according to a management rule of the DNS.

202. Add a delimiter between tiers of the host identifier. The tiers of the host identifier include an administrative domain identifier and a Hash value, and the administrative domain identifier includes a country identifier, an Authority ID, or a region identifier. In this embodiment, it is assumed that the administrative domain identifier includes the country identifier, the Authority ID, and the region identifier. In a practical application, the administrative domain identifier may include any one of or some of the following: the country identifier, the Authority ID, and the region identifier; or may also include another user-defined identifier.

203. Reverse an order of the tiers of the host identifier between which the delimiter is added according to an order of tiers of a domain name.

204. Add a domain name of the storage domain at the end of the reversed host identifier.

Steps 202-204 are a method for converting the host ID into the domain name format. The following is an example:

Assume that the host ID is "20011e574e2505264ab360d8cc1d75". Because the tiers of the host ID include the administrative domain identifier (AD ID) and the Hash value, and the administrative domain identifier includes the country identifier, the Authority ID, or the region identifier, "2001" in this host ID is the country identifier, "1e" is the Authority ID, "57" is the region identifier, and "4e2505264ab360d8cc1d75" is the Hash value of a public key and the AD ID. Add delimiters "." between the tiers of the host ID to change the host ID to a hierarchical format of "country identifier.Authority ID.region identifier.Hash value". The host ID with delimiters added is "2001.1e.57.4e2505264ab360d8cc1d75".

Because the order of the tiers of the host ID is contrary to the order of the tiers of the domain name in the DNS, the order of the tiers of the host ID with delimiters added needs to be reversed to a hierarchical format of "Hash value.region identifier. Authority ID.country identifier", so as to be consistent with the order of the tiers of the domain name. The reversed host ID is "4e2505264ab360d8cc1d75.57.1e.2001".

Add a domain name ".HRA_ID.ARPA." of the storage domain at the end of the reversed host ID to represent the domain name under the "HRA_ID.ARPA." domain. The finally formed host ID that is converted into the domain name format is "4e2505264ab360d8cc1d75.57.1e.2001.HRA_ID.ARPA.".

205. Add a first resource record in the storage domain, where the first resource record includes a mapping relation from a country domain name that is generated according to the country identifier to a domain name server of the country domain.

206. Add a second resource record in the country domain corresponding to the country domain name, where the second resource record includes a mapping relation from an operator domain name that is generated according to the Authority ID to a domain name server of the operator domain.

207. Add a third resource record in the operator domain corresponding to the operator domain name, where the third resource record includes a mapping relation from a region domain name that is generated according to the region identifier to a domain name server of the region domain.

208. Add a fourth resource record in the region domain corresponding to the region domain name, where the fourth resource record includes a mapping relation from the host identifier that is converted into the domain name format to the destination identifier, and the resource record may include the host domain name, a resource record type, a network type, Time To Live (TTL), a descriptive field, and descriptive field length.

The preceding steps 205-208 are a process of adding resource records to a DNS according to the host ID. The first resource record, the second resource record, or the third resource record may be in a form of a domain name server (Name Server; NS for short) record, and the fourth resource record may be an AAAA/A6 resource record in the DNS or another type of resource record that is redefined as required.

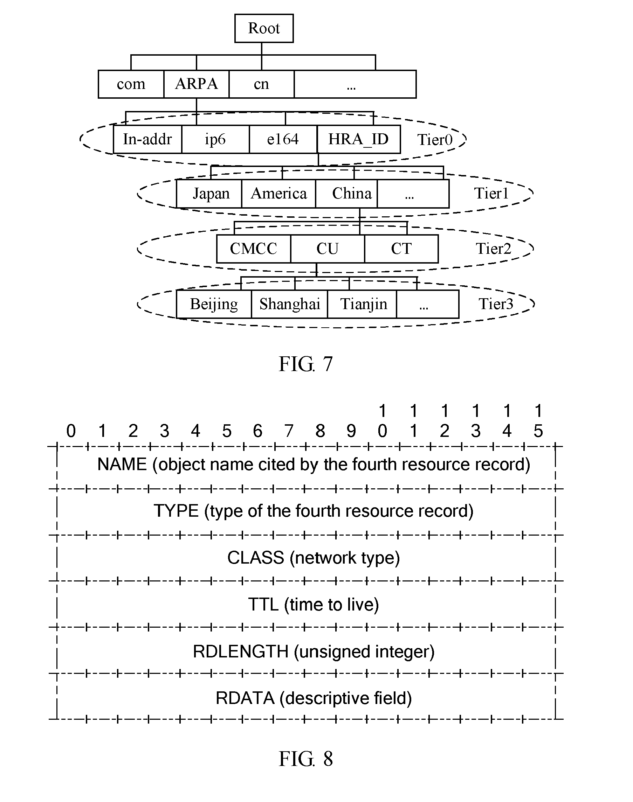

FIG 7 is a schematic diagram of a hierarchical structure of an exemplary mapping system in the second embodiment of the mapping method in the hierarchical routing architecture. As shown in FIG 7, a tier where the storage domain such as "HRA_ID" is located is Tier 0, a tier where the country domain such as "CN" is located is Tier 1, a tier where the authority domain such as "CU" is located is Tier 2, and a tier where the region domain such as "TJ" is located is Tier 3.

Firstly, the first resource record is added to a storage domain "HRA_ID.ARPA." in Tier 0. A form of the first resource record may be an NS record. The first resource record includes the mapping relation from the country domain name that is generated according to the country identifier to the domain name server of the country domain. The NS record that is included in the domain name server in Tier 0 points to the domain name server in Tier 1. For example, a "CN.HRA_ID.ARPA." sub-domain under the "HRA_ID.ARPA" domain in Tier 0 is located in Tier 1. Assuming that the country identifier allocated for CN (China) in the DNS is "2001", the country domain name that is generated according to the country identifier "2001" is "2001.HRA_ID.ARPA.", and the first resource record includes the mapping relation from the domain name "2001.HRA_ID.ARPA." in Tier 1 to the domain name server of the country domain. Secondly, the second resource record is added to a country domain "CN.HRA_ID.ARPA." in Tier 1. A form of the second resource record may be an NS record. The second resource record includes the mapping relation from the operator domain name that is generated according to the Authority ID to the domain name server of the operator domain. The NS record that is included in Tier 1 points to the domain name system server in Tier 2. For example, a "CU.CN.HRA_ID.ARPA." sub-domain under the "CN.HRA_ID.ARPA." domain in Tier 1 is located in Tier 2. Assuming that the Authority ID allocated for CU in the DNS is "1e", the operator domain name that is generated according to the Authority ID "1e" is "1e.2001.HRA_ID.ARPA.", and the second resource record includes the mapping relation from the domain name "1e.2001.HRA_ID.ARPA." to the domain name server of the operator domain. Afterward, the third resource record is added to an operator domain "CU.CN.HRA_ID.ARPA." in Tier 2. A form of the third resource record may be an NS record. The third resource record includes the mapping relation from the region domain name that is generated according to the region identifier to the domain name server of the region domain. The NS record that is included in Tier 2 points to the domain name server in Tier 3. For example, a "TJ .CU .CN.HRA_ID.ARPA." sub-domain under the "CU.CN.HRA_ID.ARPA." domain in Tier 2 is located in Tier 3. Assuming that the region identifier allocated for TJ (Tianjin) in the DNS is "57", the region domain name that is generated according to the region identifier "57" is "57.1e.2001.HRA_ID.ARPA.", and the third resource record includes the mapping relation from the domain name "57.1e.2001.HRA_ID.ARPA." to the domain name server of the region domain. Finally, a fourth resource record is added to a region domain "TJ .CU .CN.HRA_ID.ARPA." in Tier 3. The fourth resource record includes the mapping relation from the host ID "4e2505264ab360d8cc1d75.57.1e.2001.HRA_ID.ARPA." that is converted into the domain name format to the destination identifier. If the DNS server in Tier 3 is not capable of implementing management on all mapping relations in a management scope of the DNS server, a mode, such as a DHT, may further be applied instead to implement the management.

Besides, in a process of domain name resolving of the DNS, all queries except buffering are gathered to an "HRA_ID" node. To relieve query pressure on a node in Tier 0, a resolver of the DNS may query and store node address information in Tier 1, Tier 2, and so on. For example, the resolver records information about a "CT.CN" node. When a resource record corresponding to "CN.CT.BJ.XXXXXXX" needs to be resolved, querying may be directly performed at the "CT.CN" node, which relieves a load on the "HRA_ID" node in Tier 0.

Storage contents of the fourth resource record that is added in Tier 3 include the mapping relation from the host ID to the destination identifier. The fourth resource record may be an AAAA/A6 resource record in the DNS or another type of resource record that is redefined as required. After each host ID is converted into a domain name format, the corresponding destination identifier may be a host locator, or another network resource record such as a host domain name, an AD ID, or a PK. Therefore, in Tier 3, the AAAA/A6 resource record may be used to store not only the mapping relation from the host ID to the host locator, but also a mapping relation from the host ID to the host domain name, the AD ID, or the PK. If the DNS has no existent fourth resource record for storing the mapping relation from the host ID to the host domain name, the AD ID, or the PK, a new type of a fourth resource record may be defined. For example, the mapping from the host identifier to the host domain name is expressed as "IDtoDN", the mapping from the host identifier to the administrative domain identifier is expressed as "IDtoADID", and the mapping from the host identifier to the public key is expressed as "IDtoPK". The redefined fourth resource record in this embodiment is not limited to these three types. A new resource record type may be defined when a mapping relation from the host ID to another resource is applied.

FIG 8 is a schematic diagram of a format of a fourth resource record in the second embodiment of the mapping method in the hierarchical routing architecture. As shown in FIG 8, the fourth resource record includes the host ID that is converted into a domain name, the resource record type, the network type, the TTL, the descriptive field, the descriptive field length, and so on. If the fourth resource record type is the mapping from the host identifier to the host locator, the descriptive field is set to an IP address; if the fourth resource record type is the mapping from the host identifier to the host domain name, the descriptive field is set to the host domain name; if the fourth resource record type is the mapping from the host identifier to the administrative domain identifier, the descriptive field is set to the administrative domain identifier; if the fourth resource record type is the mapping from the host identifier to a public key, the descriptive field is set to the public key. The following is an example:

"Name" is used to identify an object name cited by the fourth resource record, that is, the host ID that is converted into a domain name.

"TYPE" is an octet code that is used to indicate the type of the fourth resource record, for example, "AAAA/A6", "IDtoDN", "IDtoADID", and "IDtoPK".

"CLASS" is an octet that is used to specify the network type, for example, "IN", "CH", and "HS", where "IN" is an abbreviation of Internet and is widely used, "CH" is an abbreviation of CHAOS, and "HS" is an abbreviation of Hesiod.

"TTL" is a 32-bit signed integer, means time to live (Time To Live; TTL for short), and defines, in a unit of second, the length of time for storing the fourth resource record information in a buffer. "TTL" is the length of time for buffering the fourth resource record when another domain name server or resolver receives the resource record. Considering real-time quality of a record of a mobile node, the "TTL" value of the AAAA/A6 resource record is set to "0". That is, another DNS server or resolver does not buffer the mapping from the host ID that is converted into the domain name format to the host locator. If the host needs to buffer the AAAA/A6 record for a period of time, a setting may be performed through a specific application or an operating system. For other three types of the fourth resource record, because of low dynamic variability, the "TTL" may be set to a larger value.

"RDATA" is a descriptive field and is a specific description of the fourth resource record. The content of "RDATA" varies according to the content in "TYPE". If TYPE indicates that the fourth resource record is an AAAA/A6 resource record, "RDATA" is an IPv6 address of the host; if TYPE indicates that the fourth resource record is an "IDtoDN" resource record, "RDATA" is a standard host domain name; if TYPE indicates that the fourth resource record is an "IDtoADID" resource record, "RDATA" is an AD ID in the host ID; if TYPE indicates that the four resource record is an "IDtoPK" resource record, "RDATA" is a PK of the host.

"RDLENGTH" is a 16-bit unsigned integer, which is used to indicate byte length of the descriptive field "RDATA".

In this embodiment, the format of the host identifier is converted into the domain name format, and the resource record in the DNS is used to store the mapping relation between the host identifier that is converted into the domain name format and the destination identifier. This method may be implemented by adding only a required domain name server in the domain name system, without a need to reconstruct a network. Therefore, a required development cost is low; the mapping relations from the host ID in the HRA to the host locator, the host domain name, the AD ID, the PK, and so on may be quickly and conveniently stored and queried; and separating of the host ID from the host locator is implemented.

Persons of ordinary skill in the art may understand that all or part of the steps of the methods according to the preceding embodiments of the present invention may be implemented by a program instructing relevant hardware. The program may be stored in a computer readable storage medium. When the program runs, steps of the methods of the preceding embodiment are performed. The storage medium may be any medium capable of storing a program code, such as a Read Only Memory (ROM), a Random Access Memory (RAM), a magnetic disk, or a Compact Disk-Read Only Memory (CD-ROM).

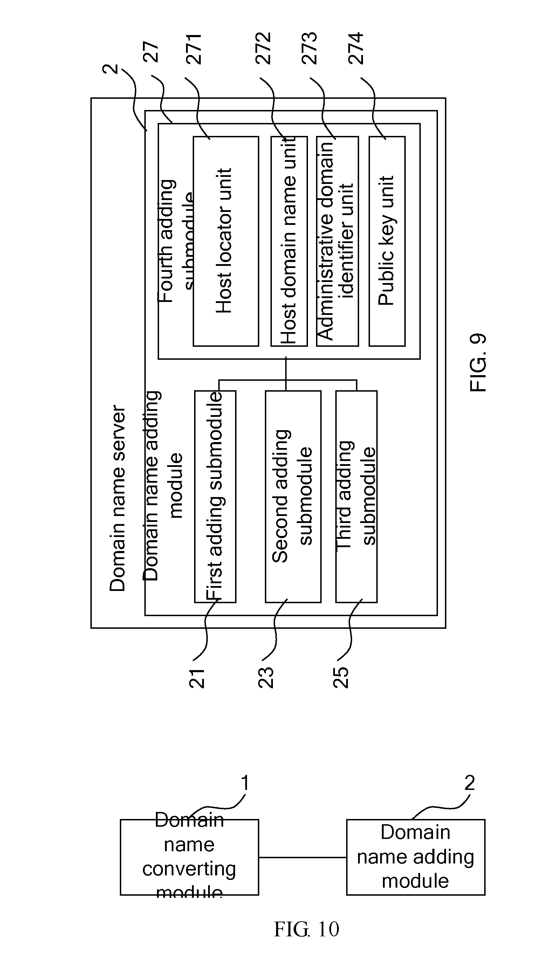

FIG 9 is a schematic structural diagram of a domain name server according to an embodiment of the present invention. As shown in FIG 9, the domain name system server includes a domain name adding module 2, which is configured to add a resource record to a domain name system according to a host identifier that is converted into a domain name format, where the resource record includes a mapping relation between the host identifier that is converted into the domain name format and a destination identifier.

Specifically, in HRA, the host identifier includes an administrative domain identifier and a Hash value, and the administrative domain identifier includes a country identifier, an Authority ID, or a region identifier, as shown in FIG 3. A client or a domain name resolver converts the format of the host identifier into the domain name format; and the domain name server adds a resource record in the DNS according to the host identifier that is converted into the domain name format. For details, see relevant descriptions in the first embodiment and the second embodiment of the mapping method in the hierarchical routing architecture of the present invention.

Further, the domain name adding module 2 may include: a first adding submodule 21, a second adding submodule 23, a third adding submodule 25, and a fourth adding submodule 27. The first adding submodule 21 is configured to add a first resource record in a storage domain, where the first resource record includes a mapping relation from a country domain name that is generated according to the country identifier to the domain name server of the country domain, and the storage domain is configured to store the resource record that includes the mapping relation between the host identifier that is converted into the domain name format and the destination identifier. The second adding submodule 23 is configured to add a second resource record in the country domain corresponding to the country domain name, where the second resource record includes a mapping relation from an operator domain name that is generated according to the Authority ID to the domain name server of the operator domain. The third adding submodule 25 is configured to add a third resource record in the operator domain corresponding to the operator domain name, where the third resource record includes a mapping relation from a region domain name that is generated according to the region identifier to the domain name server of the region domain. The fourth adding submodule 27 is configured to add a fourth resource record in the region domain corresponding to the region domain name, where the fourth resource record includes a mapping relation from the host identifier that is converted into the domain name format to the destination identifier. The first resource record, the second resource record, and the third resource record may be NS records, and the fourth resource record may be an AAAA/A6 resource record in the DNS or another type of resource record that is redefined as required.

Preferably, the fourth adding submodule 27 may include any one of or some of the following: a host locator unit 271, a host domain name unit 272, an administrative domain identifier unit 273, and a public key unit 274. The host locator unit 271 is configured to set a descriptive field of the fourth resource record to an IP address if the type of the fourth resource record is the mapping from the host identifier to the host locator. The host domain name unit 272 is configured to set the descriptive field of the fourth resource record to a host domain name if the type of the fourth resource record is the mapping from the host identifier to the host domain name. The administrative domain identifier unit 273 is configured to set the descriptive field of the fourth resource record to an administrative domain identifier if the type of the fourth resource record is the mapping from the host identifier to the administrative domain identifier. The public key unit 274 is configured to set the descriptive field of the fourth resource record to a public key if the type of the fourth resource record is the mapping from the host identifier to the public key.

Specifically, the domain name adding module 2 adds a resource record in a tier corresponding to the host domain name according to the host ID, and the first adding submodule 21 adds the first resource record in the storage domain, and stores the mapping relation from the country domain name that is generated according to the country identifier to the domain name server of the country domain in the first resource record. The second adding submodule 23 adds the second resource record in the country domain corresponding to the country domain name, and stores the mapping relation from the operator domain name that is generated according to the Authority ID to the domain name server of the operator domain in the second resource record. The third adding submodule 25 adds the third resource record in the operator domain corresponding to the operator domain name, and stores the mapping relation from the region domain name that is generated according to the region identifier to the domain name server of the region domain in the third resource record. The fourth adding submodule 27 adds the fourth resource record in the region domain corresponding to the region domain name, and stores the mapping relation from the host identifier that is converted into the domain name format to the destination identifier in the fourth resource record. The first resource record, the second resource record, and the third resource record may be in a form of NS record; and the fourth resource record may be an AAAA/A6 resource record in the DNS or another type of resource record that is redefined as required, for example, an "IDtoDN" resource record, an "IDtoADID" resource record, an "IDtoPK" resource record, and so on. The fourth resource record includes the host ID that is converted into a domain name format, a resource record type, a network type, time to live, a descriptive field, descriptive field length, and so on. The host locator unit 271 sets the descriptive field to an IP address if the type of the fourth resource record is an AAAA/A6 resource record, that is, the mapping from the host identifier to the host locator. The host domain name unit 272 sets the descriptive field to a host domain name if the type of the fourth resource record is an "IDtoDN" resource record, that is, the mapping from the host identifier to the host domain name. The administrative domain identifier unit 273 sets the descriptive field to an administrative domain identifier if the type of the fourth resource record is an "IDtoADID" resource record, that is, the mapping from the host identifier to the administrative domain identifier. The public key unit 274 sets the descriptive field to a public key if the type of the fourth resource record is an "IDtoPK" resource record, that is, the mapping from the host identifier to the public key. For specific methods for the domain name converting module and the domain name adding module to implement the mapping relation between the host identifier and the destination identifier, see relevant examples and descriptions in the second embodiment of the mapping method in the hierarchical routing architecture of the present invention.

In this embodiment, the domain name adding module in the domain name server adds, through the first adding submodule, the second adding submodule, the third adding submodule, and the fourth adding submodule, corresponding resource records in the domain name system according to the host identifier. By adding a required domain name system server in the hierarchical routing architecture, the mapping relation between the host identifier and the destination identifier is conveniently and quickly stored and queried, and the development cost is low.

FIG 10 is a schematic structural diagram of a mapping system in hierarchical routing architecture according to a first embodiment of the present invention. As shown in FIG 10, the mapping system in the hierarchical routing architecture includes a domain name converting module 1 and a domain name adding module 2. The domain name converting module 1 is configured to convert a format of a host identifier into a domain name format. The domain name adding module 2 is configured to add a resource record in a domain name system according to the host identifier that is converted into the domain name format, where the resource record includes a mapping relation between the host identifier that is converted into the domain name format and a destination identifier.

Specifically, in the hierarchical routing architecture, the host ID is separated from the host locator. To store the mapping relation from the host ID to the destination identifier such as a host locator, the domain name converting module 1 converts the host ID into the domain name format. The domain name adding module 2 adds a resource record in the domain name system according to the host ID converted into the domain name format, where the resource record includes a mapping relation between the host identifier that is converted into the domain name format and the destination identifier. The destination identifier may be a host locator, a host domain name, an administrative domain identifier, a public key, and so on. The domain name converting module 1 may be set in a domain name resolver of the DNS or in a client, or may be an independent functional entity. The domain name adding module 2 may be set in the domain name server of the DNS. The domain name adding module in this embodiment may use the domain name adding module in the domain name server embodiment of the present invention.

In this embodiment, after the domain name converting module 1 converts the format of the host identifier into the domain name format, the domain name adding module adds a resource record in the domain name system according to the host identifier that is converted into the domain name format. The resource record in the domain name system is used to store the mapping relation between the host identifier and the destination identifier. By adding only a required domain name server in the domain name system, the mapping relation between the host identifier and the destination identifier may be conveniently and quickly stored and queried, and a required development cost is low.

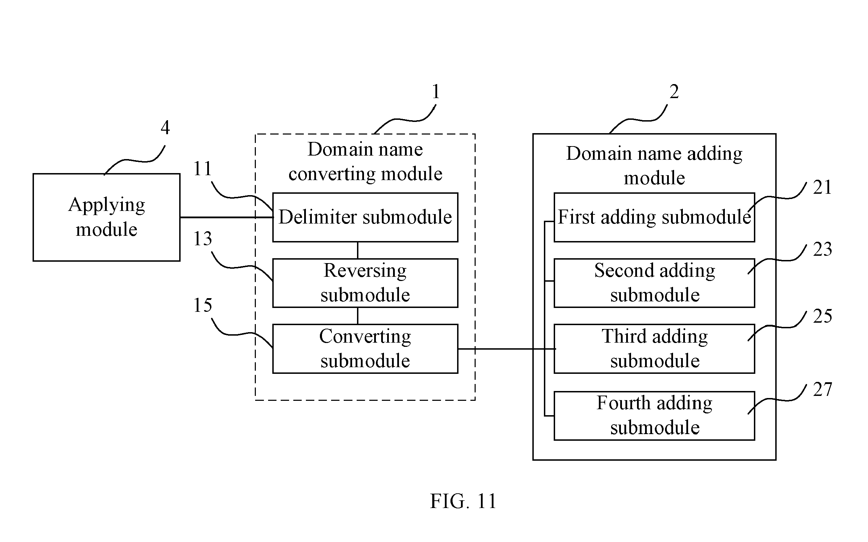

FIG 11 is a schematic structural diagram of a mapping system in hierarchical routing architecture according to a second embodiment of the present invention. As shown in FIG 11, on the basis of the first embodiment of the mapping system in the hierarchical routing architecture, this mapping system in the hierarchical routing architecture further includes an applying module 4, which is configured to apply for a storage domain for storing a resource record including the mapping relation between the host identifier that is converted into the domain name format and the destination identifier.

Further, the domain name converting module 1 includes a delimiter submodule 11, a reversing submodule 13, and a converting submodule 15. The delimiter submodule 11 is configured to add a delimiter between tiers of the host identifier, where the tiers of the host identifier include an administrative domain identifier and a Hash value, and the administrative domain identifier may include a country identifier, an Authority ID, or a region identifier. The reversing submodule 13 is configured to reverse an order of the host identifier with the delimiter added according to an order of tiers of a domain name. The converting submodule 15 is configured to add the domain name of the storage domain at the end of the reversed host identifier.

The domain name adding module 2 may include: a first adding submodule 21, a second adding submodule 23, a third adding submodule 25, and a fourth adding submodule 27. The fourth adding submodule 27 may include any one of or some of the following: a host locator unit, a host domain name unit, an administrative domain identifier unit, and a public key unit. For details, see relevant descriptions about the submodules and units of the domain name adding module in the domain name server embodiment of the present invention.

For example, after the applying module 4 applies to the DNS for a storage domain for storing the host domain name corresponding to the host ID, the delimiter submodule 11 of the domain name converting module 1 adds a delimiter "." between tiers of the host ID, and converts the host ID into a hierarchical format of "country identifier.Authority ID.region identifier.Hash value". Because the order of the tiers of the host ID is contrary to the order of the tiers of the domain name in the DNS, the reversing submodule 13 reverse the order of the tiers of the host ID between which the delimiter is added to a hierarchical format of "Hash value.region identifier.Authority ID.country identifier", which is the same as the order of the tiers of the domain name. After the domain name of the storage domain is added at the end of the reversed host ID, the host ID that is converted into the domain name format is formed. For a specific method for the domain name converting module 1 to convert the host ID into the domain name format, see a relevant example and description in the second embodiment of the mapping method in the hierarchical routing architecture of the present invention.

The domain name adding module 2 adds an NS record in a tier corresponding to the host domain name according to the host ID. Specifically, the first adding submodule 21 adds a first resource record in the storage domain, and stores a mapping relation from a country domain name that is generated according to the country identifier to the domain name server of the country domain in the first resource record; the second adding submodule 23 adds a second resource record in the country domain corresponding to the country domain name, and stores a mapping relation from an operator domain name that is generated according to the Authority ID to the domain name server of the operator domain in the second resource record. The third adding submodule 25 adds a third resource record in the operator domain corresponding to the operator domain name, and stores a mapping relation from a region domain name that is generated according to the region identifier to the domain name server of the region domain in the third resource record. The fourth adding submodule 27 adds a fourth resource record in the region domain corresponding to the region domain name, and stores a mapping relation from the host identifier that is converted into the domain name format to the destination identifier in the fourth resource record. The first resource record, the second resource record, and the third resource record may be in a form of NS record, and the fourth resource record may be an AAAA/A6 resource record in the DNS or another type of resource record that is redefined as required, for example, an "IDtoDN" resource record, an "IDtoADID" resource record, an "IDtoPK" resource record, and so on. The fourth resource record includes the host ID that is converted into the domain name format, a resource record type, a network type, time to live, a descriptive field, descriptive field length, and so on. The host locator unit sets the descriptive field to an IP address if the type of the fourth resource record is an AAAA/A6 resource record, that is, the mapping from the host identifier to the host locator. The host domain name unit sets the descriptive field to a host domain name if the type of the fourth resource record is an "IDtoDN" resource record, that is, the mapping from the host identifier to the host domain name. The administrative domain identifier unit sets the descriptive field to an administrative domain identifier if the type of the fourth resource record is an "IDtoADID" resource record, that is, the mapping from the host identifier to the administrative domain identifier. The public key unit sets the descriptive field to a public key if the type of the fourth resource record is an "IDtoPK" resource record, that is, the mapping from the host identifier to the public key. For specific methods for the domain name converting module and the domain name adding module to implement the mapping relation between the host identifier and the destination identifier, see relevant examples and descriptions in the second embodiment of the mapping method in the hierarchical routing architecture of the present invention.

In this embodiment, the delimiter submodule, the reversing submodule, and the converting submodule are used to convert the format of the host identifier into the domain name format; the first adding submodule, the second adding submodule, the third adding submodule, and the fourth adding submodule add the corresponding resource records in the domain name system according to the host identifier. By adding a required domain name server in the hierarchical routing architecture, the mapping relation between the host identifier and the destination identifier may be conveniently and quickly stored and queried, and the development cost is low.

It should be noted that the preceding embodiments are merely provided for describing the technical solutions of the present invention, but not intended to limit the present invention. It is apparent that persons skilled in the art can make various modifications and replacements to the present invention without departing from the idea and the scope of the present invention. The present invention is intended to cover the modifications and replacements provided that they fall within the scope of protection defined by the following claims or equivalents thereof.

## Claims

1. A mapping method in hierarchical routing architecture, comprising:
converting a format of a host identifier into a domain name format; and
adding a resource record in a domain name system according to the host identifier that is converted into the domain name format, wherein the resource record comprises a mapping relation between the host identifier that is converted into the domain name format and a destination identifier.

2. The mapping method in the hierarchical routing architecture according to claim 1, wherein before the converting the format of the host identifier into the domain name format, the method comprises:
in the domain name system, applying for a storage domain for storing the resource record that comprises the mapping relation from the host identifier that is converted into the domain name format to the destination identifier.

3. The mapping method in the hierarchical routing architecture according to claim 2, wherein the converting the format of the host identifier into the domain name format comprises:
adding a delimiter between tiers of the host identifier, wherein the host identifier comprises an administrative domain identifier and a Hash value, and the administrative domain identifier comprises a country identifier, an operator identifier, or a region identifier;
reversing an order of the tiers of the host identifier between which the delimiter is added according to an order of tiers of a domain name; and
adding a domain name of the storage domain at the end of the reversed host identifier.

4. The mapping method in the hierarchical routing architecture according to claim 2 or claim 3, wherein:
the adding the resource record in the domain name system according to the host identifier that is converted into the domain name format comprises at least one of the following:
adding a first resource record in the storage domain, wherein the first resource record comprises a mapping relation from a country domain name that is generated according to the country identifier to a domain name server of the country domain; or
adding a second resource record in the country domain corresponding to the country domain name, wherein the second resource record comprises a mapping relation from an operator domain name that is generated according to the authority identifier to a domain name server of the operator domain; or
adding a third resource record in the operator domain corresponding to the operator domain name, wherein the third resource record comprises a mapping relation from a region domain name that is generated according to the region identifier to a domain name server of the region domain; and
adding a fourth resource record in the region domain corresponding to the region domain name, wherein the fourth resource record comprises a mapping relation from the host identifier that is converted into the domain name format to the destination identifier.

5. The mapping method in the hierarchical routing architecture according to claim 4, wherein:
the adding the fourth resource record in the region domain corresponding to the region domain name, wherein the fourth resource record comprises the mapping relation from the host identifier that is converted into the domain name format to the destination identifier, specifically comprises:
adding the fourth resource record in the region domain corresponding to the region domain name; and
if a type of the fourth resource record is a mapping from the host identifier to a host locator, setting a descriptive field of the fourth resource record to an IP address; or
if the type of the fourth resource record is a mapping from the host identifier to the host domain name, setting the descriptive field of the fourth resource record to a host domain name; or
if the type of the fourth resource record is a mapping from the host identifier to the administrative domain identifier, setting the descriptive field of the resource record to the administrative domain identifier; or
if the type of the fourth resource record is a mapping from the host identifier to the public key, setting the descriptive field of the fourth resource record to a public key.

6. A domain name server, comprising:
a domain name adding module, configured to add a resource record in a domain name system according to a host identifier that is converted into a domain name format, wherein the resource record comprises a mapping relation between the host identifier that is converted into the domain name format and a destination identifier.

7. The domain name server according to claim 6, wherein the host identifier comprises an administrative domain identifier and a Hash value, the administrative domain identifier comprises a country identifier, an operator identifier, or a region identifier, and the domain name adding module comprises at least one of the following submodules:
a first adding submodule, configured to add a first resource record in a storage domain, wherein the first resource record comprises a mapping relation from a country domain name that is generated according to the country identifier to a domain name server of the country domain, and the storage domain is configured to store the resource record that comprises the mapping relation between the host identifier that is converted into the domain name format and the destination identifier; or
a second adding submodule, configured to add a second resource record in the country domain corresponding to the country domain name, wherein the second resource record comprises a mapping relation from an operator domain name that is generated according to the operator identifier to a domain name server of the operator domain; or
a third adding submodule, configured to add a third resource record in the operator domain corresponding to the operator domain name, wherein the third resource record comprises a mapping relation from a region domain name that is generated according to the region identifier to a domain name server of the region domain; and
a fourth adding submodule, configured to add a fourth resource record in the region domain corresponding to the region domain name, wherein the fourth resource record comprises the mapping relation from the host identifier that is converted into the domain name format to the destination identifier.

8. The domain name server according to claim 7, wherein the fourth adding submodule comprises at least one of the following units:
a host locator unit, configured to set a descriptive field of the fourth resource record to an IP address if a type of the fourth resource record is a mapping from the host identifier to a host locator;
a host domain name unit, configured to set the descriptive field of the fourth resource record to a host domain name if the type of the fourth resource record is a mapping from the host identifier to the host domain name;
an administrative domain identifier unit, configured to set the descriptive field of the fourth resource record to an administrative domain identifier if the type of the fourth resource record is a mapping from the host identifier to the administrative domain identifier; or
a public key unit, configured to set the descriptive field of the fourth resource record to a public key if the type of the fourth resource record is a mapping from the host identifier to the public key.

9. A mapping system in a hierarchical routing architecture, comprising:
a domain name converting module, configured to convert a format of a host identifier into a domain name format; and
a domain name adding module, configured to add a resource record in a domain name system according to the host identifier that is converted into the domain name format, wherein the resource record comprises a mapping relation between the host identifier that is converted into the domain name format and a destination identifier.

10. The mapping system in the hierarchical routing architecture according to claim 9, further comprising:
an applying module, configured to apply to the domain name system for a storage domain for storing the resource record that comprises the mapping relation between the host identifier that is converted into the domain name format and the destination identifier.

11. The mapping system in the hierarchical routing architecture according to claim 10, wherein the domain name converting module comprises:
a delimiter submodule, configured to add a delimiter between tiers of the host identifier, wherein the host identifier comprises an administrative domain identifier and a Hash value, and the administrative domain identifier comprises a country identifier, an operator identifier, or a region identifier;
a reversing submodule, configured to reverse an order the host identifier with the delimiter added according to an order of tiers of a domain name; and
a converting submodule, configured to add a domain name of the storage domain at the end of the reversed host identifier.
